# EUROPÄISCHE PATENTSCHRIFT

(11) **EP 0 885 794 B1**
(45) Veröffentlichungstag und Bekanntmachung des Hinweises auf die Patenterteilung: **24.10.2001**
(21) Anmeldenummer: 97110204.1
(22) Anmeldetag: 22.06.1997
(51) Int. Cl.: B61D 47/00, B60P 1/64, B65G 67/02

(54) **Umschlagsystem**
Transit system
Système de transbordement

(43) Veröffentlichungstag der Anmeldung: 23.12.1998
(73) Patentinhaber: DaimlerChrysler AG, 70567 Stuttgart (DE)
(72) Erfinder: Kölker, Carl Wilhelm, 6340 Baar (CH); Thiele, Bernd, 42329 Wuppertal (DE)
(74) Vertreter: König, Reimar, Dr.-Ing.

(56) Entgegenhaltungen:
- EP-A- 0 273 354
- EP-A- 0 447 574
- CH-A- 117 668
- DE-A- 4 222 956
- FR-A- 2 649 373
- US-A- 2 996 206

## Beschreibung

Die Erfindung bezieht sich auf ein Umschlagsystem mit einem Tiefbettwaggon für den kombinierten Straßen- und Schienenverkehr beispielsweise mit Sattelanhängern.

Der von Jahr zu Jahr mit hohen Wachstumsraten zunehmende Güterverkehr hat schon sehr frühzeitig den Gedanken aufkommen lassen, die Vorteile des Straßen- und des Schienenverkehrs in einem kombinierten System Schiene/Straße zusammenzuführen und dabei den Nahbereich bzw. den Vor- und den Nachlauf dem Straßenverkehr als Zubringerdienst zu überlassen. Dieses System hat sich als solches bewährt, übernimmt derzeit aber nur einen geringen Anteil des Verkehrsaufkommens, der jedoch im Hinblick auf die prognostizierte Entwicklung des Güteraufkommens einer erheblichen Ausweitung bedarf.

Dies bringt angesichts der hohen Investitions- und Betriebskosten sowie des großen Flächenbedarfs der Umschlagterminals erhebliche Probleme mit sich. Hinzu kommen der große Zeitaufwand beim Be- und Entladen sowie beim Rangieren der Waggons und der Zubringerfahrzeuge. Der sich ohnehin nur auf längeren Strecken bemerkbar machende Zeitgewinn beim Schienentransport geht so angesichts der niedrigen Umschlaggeschwindigkeiten der Terminals weitestgehend verloren. Das gilt namentlich für den Vertikalumschlag, der aufwendige Krananlagen erfordert, um mit einem oder mehreren Portalkränen eine ganze Zuglänge abfahren zu können und einen Quertransport der Frachtbehälter bzw. Transporteinheiten von etwa 25 m zu ermöglichen. Da jeder Kran jeweils nur eine Einheit transportieren kann und der Transport LKW/Waggon mehrere Minuten in Anspruch nimmt, hängt die Umschlaggeschwindigkeit im Terminal von der Anzahl der zur Verfügung stehenden Kräne ab.

Um einen Güterzug mit etwa 30 Waggons und dementsprechend 60 Frachtbehältern mit einem Kran zu be- oder entladen, sind mehrere Stunden erforderlich, während derer das rollende Material, insbesondere die Waggons keine Verkehrsleistung erbringen. Hinzu kommt, daß der auch nur vorübergehende Ausfall eines Krans angesichts der hohen Taktfolge des schienengebundenen Personen- und Güterverkehrs das Fahrplangefüge durcheinanderbringt, was insbesondere bei der stark zunehmenden Tendenz zu Just-in-time-Lieferungen der Ausweitung des kombinierten Verkehrs enge Grenzen setzt.

Um den Krantransport zu vermeiden, schlägt die deutsche Offenlegungsschrift 33 13 211 die Verwendung eines Niederflurwaggons vor, der mit einer seitenverschiebbaren Ladeplattform versehen ist. Die Ladeplattform läßt sich senkrecht zur Längsachse des Waggons horizontal ausfahren und erlaubt so ein gleisparalleles Befahren durch Lastzüge. Ein wesentlicher Nachteil dieses Systems besteht darin, daß die Ladeplattformen, wenn sie gleichzeitig ausgefahren sind, mit einem Abstand von etwa 5 m hintereinanderliegen und daher ein gleichzeitiges Beladen nicht erlauben. Demgemäß müssen die Lastzüge, wie beim Beladen von Waggons über eine Kopframpe, von einer Seite her nacheinander die einzelnen Ladeplattformen überfahren, bis sie die ihnen zugeordnete Ladeplattform erreichen. Eine andere Möglichkeit besteht darin, die Ladeplattformen nacheinander jeweils einzeln zur Seite auszufahren und zu beladen. Ein gleichzeitiges Be- und Entladen aller Waggons ist bei diesem System nicht möglich.

Hinzu kommt, daß dieses System LKW-abhängig ist und sich demgemäß nicht für den Transport antriebsloser Sattelanhänger und Container eignet. Demgemäß wird beim Beladen der Waggons - anders als beim Container-Verkehr - keine Transportkapazität für den Straßenverkehr frei. Vielmehr legt der komplette Lastzug nach wie vor die volle Strecke zwischen Start- und Zielbahnhof zurück; dies allerdings im Nahbereich auf der Straße und im Fernbereich auf dem Eisenbahnwaggon bzw. der Schiene.

Diesen Nachteil beseitigt ein aus der europäischen Patentschrift 0 023 372 bekannter Tiefbettwaggon mit Hilfe einer mittig drehbaren Ladeplattform, die ein gleichzeitiges Be- und Entladen von der Seite her bzw. zur Seite hin erlaubt. Das erfordert jedoch bei einem Güterzug mit 30 Waggons insgesamt 60 Zugmaschinen jeweils mit einem Fahrer, und zwar je 30 zum Herunterfahren der angelieferten Sattelanhänger von den seitlich ausgeschwenkten Ladeplattformen auf der einen Seite des Zuges und je 30 Zugmaschinen zum Beladen der Ladeplattformen von der anderen Seite her. Für das nur wenige Minuten in Anspruch nehmende Be- und Entladen der Waggons ist daher ein hoher maschineller und personeller Aufwand erforderlich. Die damit verbundenen Kosten dürften die Ursache dafür sein, daß sich auch dieses System nicht durchgesetzt hat.

Der Erfindung liegt nun das Problem zugrunde, ein Umschlagsystem zu schaffen, das nicht nur ein kranloses Be- und Entladen eines ganzen Zugs innerhalb von wenigen Minuten ohne die Verwendung aufwendiger Zugmaschinen erlaubt, sondern mit gleichgeringem Aufwand auch das Beund Entladen eines einzelnen oder auch mehrerer Waggons.

Die Lösung dieser Aufgabe basiert auf dem Gedanken, beim Verladen der Transporteinheiten bordeigene oder stationäre Lafetten zu verwenden, die die Transporteinheiten, vorzugsweise Sattelanhänger, unterfahren, aufnehmen und auf dem Waggon absetzen.

Im einzelnen besteht die Erfindung in einem Umschlagsystem mit einem Tiefbettwaggon aus einem auf Drehgestellen, vorzugsweise mit drei Achsen, gelagerten Rahmen und quer zur Rahmenlängsachse verfahrbaren, mitgeführten oder stationären Unterfahrlafetten, beispielsweise in Gestalt eines Raupenfahrwerks. Derartige Lafetten lassen sich im Bereich der Rahmenkröpfungen des Waggons anordnen und mit bordeigener, vorzugsweise zentraler Steuerung von der Lokomotive aus unter die parallel zu den Gleisen aufgestellten Transporteinheiten, beispielsweise Sattelanhänger oder Wechselaufbauten mit Wechselfahrwerk, fahren. Um beispielsweise Sattelanhänger aufzunehmen, brauchen lediglich Lafettenhubwerke ausgefahren zu werden, die den Sattelanhänger anheben. Die Lafetten brauchen dann nur noch die kurze Strecke von der Rampe auf den Waggon zurückzufahren, um den Sattelanhänger dort so abzusetzen, daß dessen Räder in eine Tasche des Waggons gelangen.

Die Querfahrt der Lafetten, das Ausfahren der Hubwerke, das notwendige Anheben der Achsen des Sattelanhängers im Hinblick auf die für den Transport zum Waggon notwendige Bodenfreiheit sowie das Zurückfahren der Lafetten, das Absetzen der Sattelanhänger auf den Waggons und das dort notwendige Verriegeln der Lafetten für den Schienentransport geschieht gleichzeitig und läßt sich mit Hilfe von Endschaltern zentral und synchron steuern.

Handelt es sich um Aufbauten mit Wechselfahrwerk, dann bleibt das Fahrwerk auf der Ladestraße zurück und wird nur der Aufbau auf den Tiefbettwaggon abgesetzt. Ansonsten verläuft der Umschlag genauso wie im Falle eines Sattelanhängers.

Das erfindungsgemäße Transportsystem erfordert als zusätzlichen Aufwand im wesentlichen nur die bordeigenen oder auch stationären Lafetten, beispielsweise die erwähnten Raupenfahrwerke, und mindestens eine schmale Ladestraße bzw. Rampe neben dem Gleis. Der Flächenbedarf für die Ladestraße bzw. Rampe ist äußerst gering, weil die Sattelanhänger bzw. Transporteinheiten lediglich mit vorgegebenem Abstand in einer Reihe hintereinander abgestellt zu werden brauchen und die Zugmaschinen sodann sofort frei sind, um einen neuen, beispielsweise gerade abgeladenen, Sattelanhänger aufzunehmen.

Die Ladestraßen und Rampen lassen sich beispielsweise unter Verwendung großflächiger Platten auf einem eingeebneten Untergrund mit minimalem und daher überall möglichem Flächen- und Kostenaufwand errichten. Das erlaubt eine flächendeckende Anordnung der Terminals mit kurzen Abständen von 200 km und angesichts der hohen Umschlaggeschwindigkeit einen wirtschaftlichen Schienentransport auch auf kürzeren Strecken, aber auch ein Umsetzen einzelner Transporteinheiten (Wechselaufbauten oder Sattelanhänger mit Festaufbau oder Containern) von einem auf einen anderen Güterzug.

Um Sattelanhänger für die Übernahme durch die Lafetten exakt zu positionieren, kann die Rampe mit schalenförmigen Vertiefungen für die Räder der Zugmaschine und/oder des Sattelanhängers ausgestattet sein. Des weiteren kann der Tiefbettwaggon im Bereich mindestens einer Kröpfung mit einer Tragplatte für das Absetzen der Transporteinheit versehen sein. Dabei kann sich in der Tragplatte eine Zapfenaufnahme, beispielsweise für den Königszapfen eines Sattelanhängers binden, die ein lagegerechtes Absetzen auf dem Waggon bzw. dessen Tragplatte bzw. Tragplatten gewährleistet. Der Zapfen kann in der Tragplatte verriegelt sein.

Im einzelnen vollzieht sich der kombinierte Verkehr mit dem erfindungsgemäßen Umschlagsystem wie folgt:

Die zu verladenden Transporteinheiten werden mit üblichen Zugmaschinen auf eine Ladestraße in eine vorgegebene, zweckmäßigerweise mit Einweisern in Gestalt von Bodenmulden versehene Warteposition gebracht und dabei entsprechend dem Standort der Tiefbettwaggons mit einem Abstand von etwa 1 m von der Ladestraßenkante in Reihe hintereinander aufgestellt. Wenn ein Sattelanhänger oder eine Transporteinheit mit Wechselfahrwerk so in üblicher Weise abgestellt ist, steht die betreffende Zugmaschine für den Straßentransport eines anderen Sattelanhängers bzw. einer anderen Transporteinheit zur Verfügung.

Sobald ein Güterzug, beispielsweise mit leeren Tiefbettwaggons seine vorgegebene Halteposition erreicht hat, bewegen sich, vorzugsweise von der Lokomotive aus zentral gesteuert, sämtliche Lafetten gleichzeitig von ihrer Warteposition auf den Waggons oder der Ladestraße bis in die vorgegebene Übernahmeposition beispielsweise unter den aufgereihten Sattelanhängern, übernehmen diese und fahren gemeinsam in die Transportlage auf den Waggons, wo sie die Sattelanhänger unter gleichzeitiger Verriegelung absetzen. Damit ist der Ladevorgang abgeschlossen und steht die Rampe für das Aufstellen der nächsten Sattelanhänger zur Verfügung.

Anstelle des zuvor geschilderten Beladens leerer Tiefbettwaggons können selbstverständlich auch mit Sattelanhängern versehene Waggons mit Hilfe der Lafetten zur einen Seite hin entladen und mit Hilfe derselben Lafetten von der anderen Gleisseite her beladen werden. Dies ist nicht nur für sämtliche Waggons gleichzeitig möglich, sondern es können auch einzelne Waggons be- und/oder entladen werden, um beispielsweise einzelne Sattelanhänger nach Art eines Umsteigens auf einen anderen Güterzug zu verladen. Dieser Güterzug befindet sich vorzugsweise auf der anderen Seite einer Rampe, so daß dessen Lafetten die Sattelanhänger dort übernehmen können, wo sie die Lafetten des angekommenen Güterzugs abgesetzt haben. Das erfordert eine Rampenbreite von nur etwa 4 m ohne jegliche technische Installationen.

Bei entsprechender Steuerung arbeitet das erfindungsgemäße Umschlagsystem mit den Tiefbettwaggons praktisch ohne jeden Personalbedarf; allenfalls ein Platzmeister ist erforderlich, um für Notfälle vorzusorgen.

Bei der Verwendung der Lafetten bedarf es zum Verladen der Sattelanhänger eines Anhebens der Anhängerachsen und eines Hochschwenkens des heckseitigen Unterfahrschutzes, um die für den Transport zum Waggon notwendige Bodenfreiheit zu schaffen und zu verhindern, daß der Unterfahrschutz beim Verladen auf die Kröpfung eines Waggons prallt. Dies läßt sich ohne weiteres in das System integrieren und vollautomatisch bewerkstelligen; beispielsweise mit Hilfe einer am Anhängerheck angeordneten Zahnstange, eines Doppelritzels zum Übertragen der Zahnstangenbewegung auf eine horizontale, im Anhängerrahmen gelagerte Schubstange, die einerseits mittels über Rollen geführter Seile mit den Anhängerachsen und andererseits über einen Lenker mit einer Kurbel des Unterfahrschutzes verbunden sein kann. Die vertikale Zahnstange wird von einer der beiden Lafetten je Anhänger bei dessen Übernahme von der Rampe automatisch betätigt und bewirkt über die Seile ein Anheben der Anhängerachsen und über die Kurbel ein Hochschwenken des Unterfahrschutzes.

Die Erfindung wird nachfolgend anhand eines in der Zeichnung dargestellter Ausführungsbeispiele des näheren erläutert. In der Zeichnung zeigen:

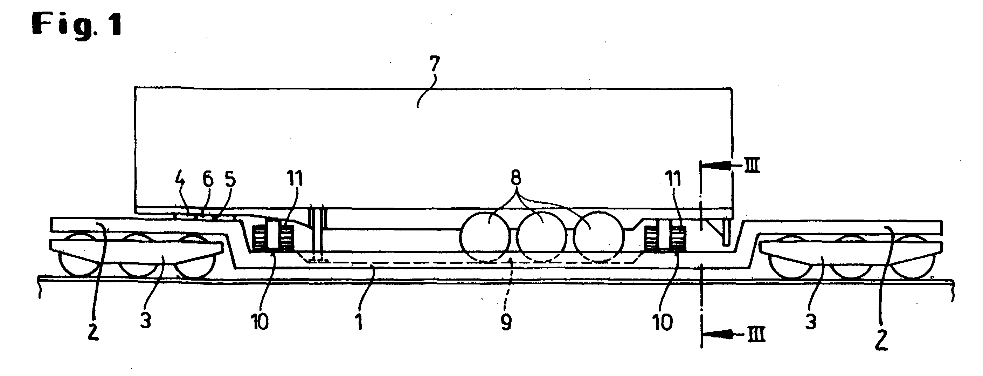

- Fig. 1: einen Tiefbettwaggon in Seitenansicht,
- Fig. 2: eine Tragplatte mit einer Aufnahme für den Königszapfen eines Sattelanhängers,
- Fig. 3: einen Schnitt nach der Linie III-III in Fig. 1,

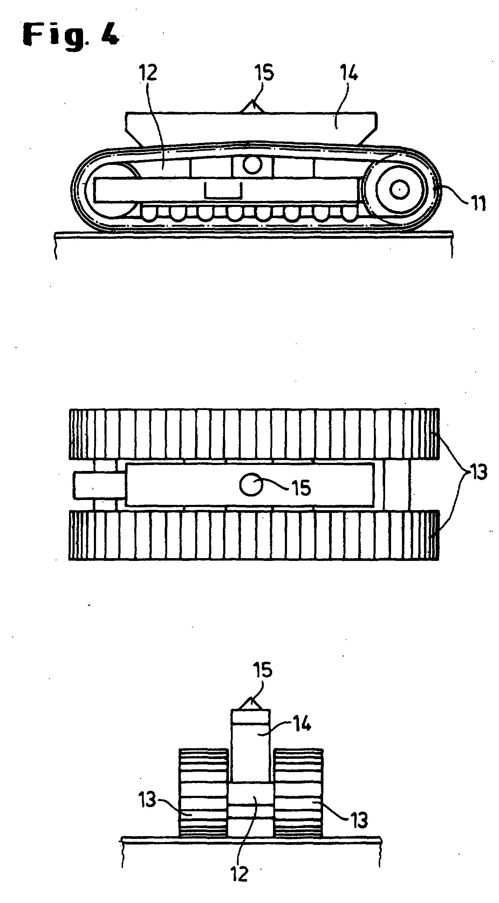

- Fig. 4: verschiedene Ansichten eines Raupenfahrwerks,
- Fig. 5: das Heck eines abgestellten Sattelanhängers,
- Fig. 6: das Anhängerheck der Figur 3 zusammen mit dem zugehörigen Raupenfahrwerk,

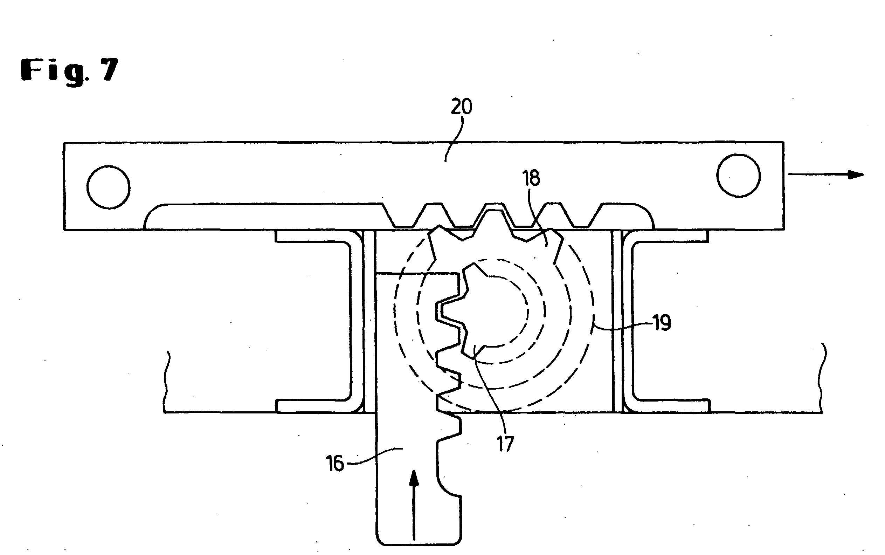

- Fig. 7: eine vergrößerte Darstellung der Vorrichtung zum Anheben der Anhängerachsen und zum Hochschwenken des heckseitigen Unterfahrschutzes,
- Fig. 8: eine Draufsicht auf ein Terminal mit zwei beiderseits der Gleise angeordneten Rampen und Umschlagbetrieb auf beiden Seiten,
- Fig. 9: eine Draufsicht auf ein Terminal zum wechselseitigen Beladen eines Güterzugs über zwei Rampen,

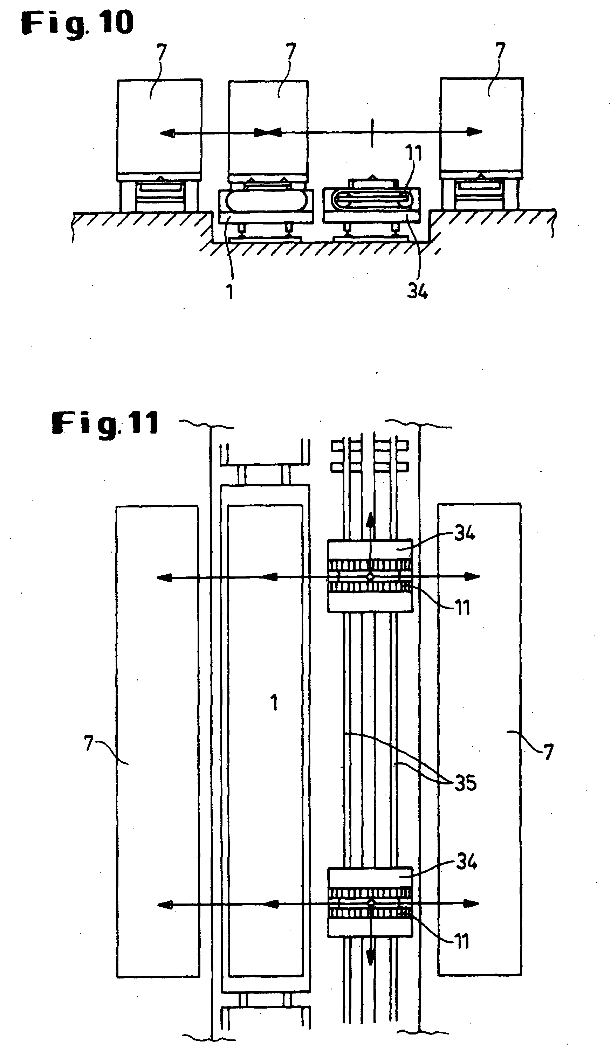

- Fig. 10: eine stationäre Anordnung der Lafetten in einer Schnittdarstellung und
- Fig. 11: eine Draufsicht auf die Anordnung der Fig. 10.

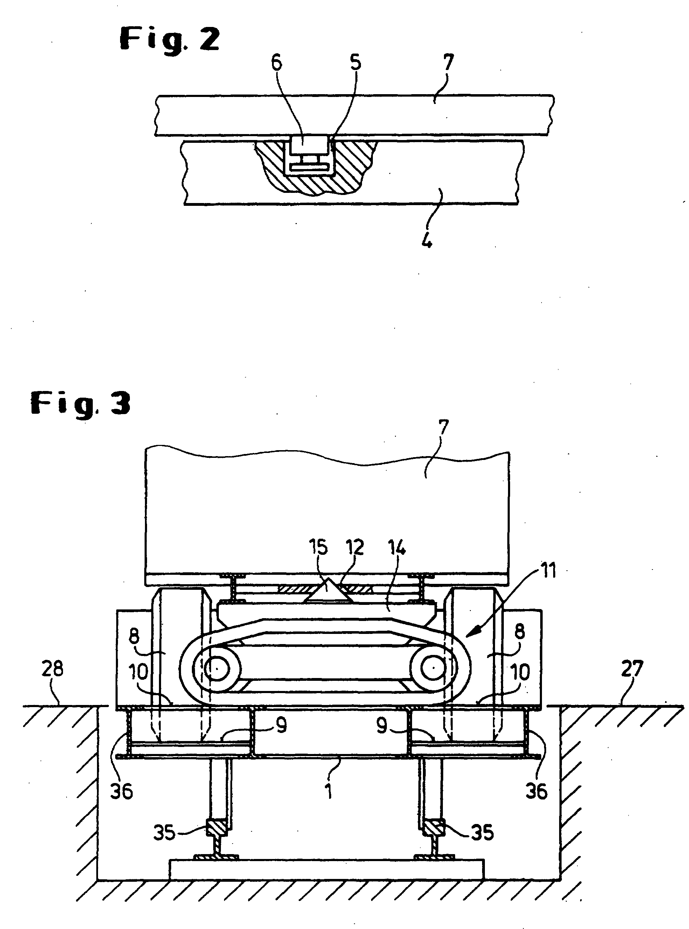

Der erfindungsgemäße Tiefbettwaggon besteht aus einem Rahmen 1, der an seinen Stirnseiten über Abkröpfungen 2 in üblicher Weise auf je einem dreiachsigen Laufwerk 3 gelagert ist. Der Rahmen besitzt am vorderen Ende eine Tragplatte 4 mit einer Zapfenaufnahme 5, in die der Königszapfen 6 eines Sattelanhängers 7 eingreift. Dieser Sattelanhänger ruht auf der Tragplatte 4 und stützt sich über seine Räder 8 auf dem Boden einer Tasche 9 des Rahmens 1 ab (Fig. 3).

Zwischen dem Waggonrahmen 1 und dem Sattelanhänger 7 befinden sich auf je einer Standfläche 10 zwei Selbstfahrlafetten bzw. Raupenfahrwerke 11 mit angetriebenen Ketten 13 und einem Hubbalken 14. Der Hubbalken ist mittig mit einem in eine komplementäre Öffnung 12 an der Unterseite des Sattelanhängers 7 eingreifenden Zentrierkegel 15 versehen und trifft, sobald sich das Raupenfahrwerk 11 in der vorgesehenen Übernahmeposition unter dem Anhängerheck befindet, bei der Übernahme des Sattelanhängers auf eine vertikale Zahnstange 16, die mit der Kleindurchmesserstufe 17 eines Doppelritzels 18 kämmt, während dessen Großdurchmesserstufe 19 mit der Verzahnung einer horizontalen Schubstange 20 kämmt. Diese Schubstange ist zur linken Seite hin mittels eines über Rollen 21 geführten Seilzugs 22 mit den Achsen 23 der Anhängerräder 8 verbunden. Zur anderen Seite hin greift die horizontale Schubstange 20 über einen Lenker 24 an einer Kurbel 25 eines am Anhängerheck verschwenkbar gelagerten Unterfahrschutzes 26 an.

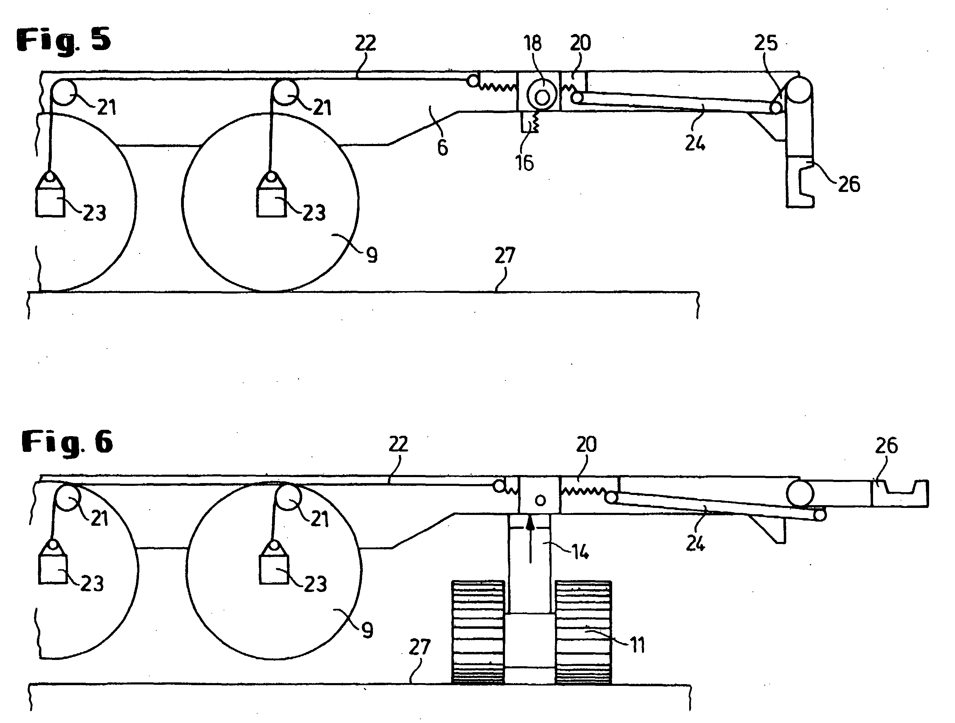

Wenn sich die vertikale Zahnstange 16 nach oben bewegt, verschiebt sich die horizontale Schubstange 20 entsprechend der Übersetzung des Doppelritzels 18 nach rechts und sichert so die Anhängerachsen gegen ein Absenken, so daß die Räder 8 vom Boden freikommen und gleichzeitig der Unterfahrschutz 26 in die Horizontale geschwenkt wird, so wie das in den Fig. 5 und 6 dargestellt ist. Das Hochschwenken des Unterfahrschutzes 26 verhindert, daß dieser beim Verladen des Sattelanhängers 7 auf die hintere Abkröpfung 2 bzw. eine dort befindliche Tragplatte trifft, während das Festhalten der Radachsen Voraussetzung für ein Querverfahren des Sattelanhängers 7 beim Verladen ist; denn die Räder 8 würden ohne ein Anheben des Sattelanhängers 7 mit Hilfe der Hubbalken 14 und ihrer Zapfen 15 sonst ihre Bodenberührung beibehalten, so daß eine Querfahrt der Raupenfahrwerke 11 auf die mit der Rampe 27 niveaugleichen Raupenstandflächen 10 nicht möglich wäre.

An die Stelle des Seilzugs 22 kann auch ein horizontal verfahrbares Gestänge treten, das mit Haken unter die Radachsen greift und diese gegen ein Absenken sichert.

Sobald die Rampenfahrzeuge 11 mit dem Sattelanhänger 7 ihre Standflächen 10 auf dem Waggon erreicht haben, senkt der Hubbalken 14 den Anhänger 7 ab, bis dessen Räder 8 den Boden der Tasche 9 erreichen, der Hubbalken 14 vom Rahmen des Anhängers 7 freikommt und der Königszapfen 6 in die Zapfenaufnahme 5 der Tragplatte 4 gelangt. Der Sattelanhänger ruht dann über die Tragplatte 4 und seine Räder 8 zur Gänze auf dem Rahmen 1 des Waggons, während die Lafetten 11 entlastet sind und nur noch auf dem Rahmen arretiert zu werden brauchen.

Beim Verladen eines radlosen Aufbaus, der mit einem Wechselfahrwerk am Straßenverkehr teilnimmt und dessen Wechselfahrwerk auf der Ladestraße verbleibt, wird der Aufbau auf den beiden Abkröpfungen 2 oder auf dort befindlichen Tragplatten abgesetzt.

Um Toleranzen und Wärmedehnungen in Längsrichtung der Transporteinheit 7 auszugleichen, kann der Zentrierzapfen 15 auch quer zu den Hubbalken 14 verschiebbar gelagert sein.

Die Tasche 9 erstreckt sich bis in den Bereich der Standfläche 10 der vorderen Lafette 11 und wird beiderseits von je einem Längsträger 36 begrenzt.

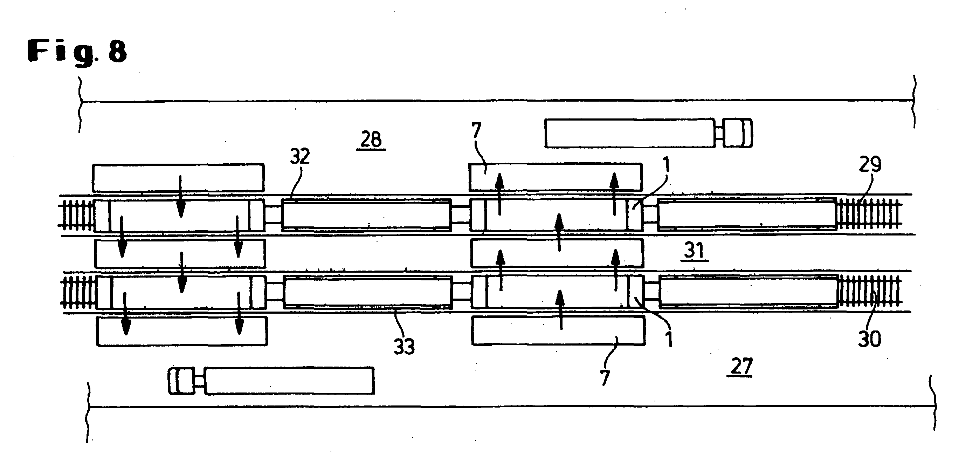

Besitzt ein Terminal entsprechend der Darstellung in Fig. 8 zwei Ladestraßen 27,28 beiderseits zweier Gleise 29,30 und eine Mittelrampe 31, dann besteht die Möglichkeit, zunächst einen Sattelanhänger 7 mit Hilfe der Selbstfahrlafetten 11 von dem Waggon eines Güterzugs 32 zur einen Seite hin zu entladen und auf der Ladestraße 28 abzustellen. Die Lafetten fahren dann über den Rahmen 1 des entladenen Tiefbettwaggons des Zuges 32 zurück bis in die Übernahmeposition des auf der Mittelrampe 31 vorher vom Güterzug 33 abgestellten Sattelanhängers 7 und bringen diesen schließlich in seine Transportlage auf dem Tiefbettwaggon des Güterzuges 32. Die Selbstfahrlafetten 11 von dem Waggon eines Güterzuges 33 fahren nun in die Übernahmeposition unter den auf der Ladestraße 27 abgestellten Sattelanhänger 7 und bringen diesen auf den zuvor freigewordenen Platz auf den Waggon des Güterzugs 33.

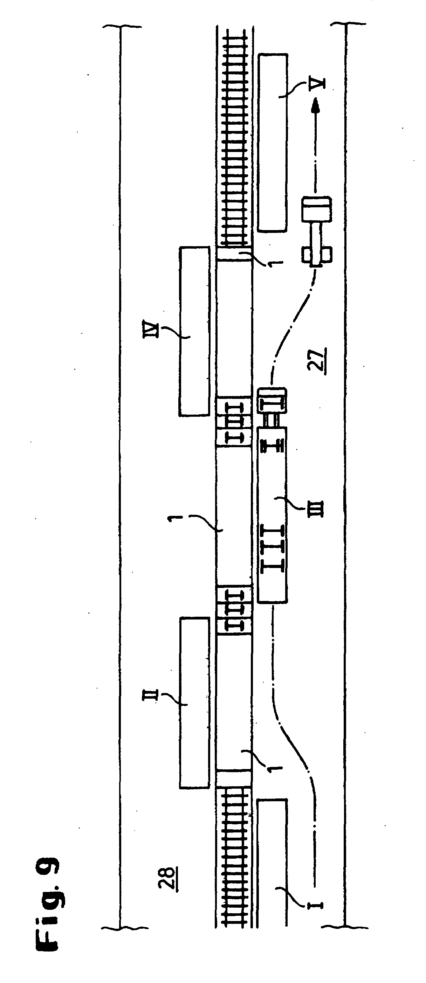

Von besonderem Vorteil im Hinblick auf die Anfahrt der Zubringerfahrzeuge ist ein wechselseitiges Beladen, wie es das Umschlagsystem gemäß Fig. 9 veranschaulicht, bei dem die Transporteinheiten I bis V wechselseitig verladen werden. Dies geschieht in der Weise, daß beispielsweise jeweils abwechselnd ein Sattelanhänger I auf der Ladestraße 27, ein Sattelanhänger II auf der Ladestraße 28 und ein Sattelanhänger III auf der Ladestraße 27 usw. abgestellt wird. Das bringt den Vorteil eines mühelosen Erreichens der Übernahmeposition mit sich. So steht beispielsweise für den Sattelzug III bei einer Rampenbreite von 8 m zwischen den beiden Sattelanhängern I und V ein Freiraum von 50 m zur Verfügung, um den Sattelanhänger III in seine Übernahmeposition dicht neben den ihn aufnehmenden Waggon zu bringen. Das Auffinden der jeweiligen Stellplätze der Sattelanhänger auf den beiden Ladestraßen 27,28 läßt sich dadurch erleichtern, daß die Stellplätze auf der einen Ladestraße mit geraden und die Stellplätze auf der anderen Ladestraße mit ungeraden Ziffern markiert werden. Für den Anlieferer ist es dann ein Leichtes, seinen Stellplatz zu finden und zu erreichen.

Das erfindungsgemäße Umschlagsystem läßt sich auch in der Weise verwirklichen, daß die Lafetten nicht von den Waggons mitgeführt werden, sondern stationär angeordnet sind; sie können dann auf seinem Lafettenwagen 34 angeordnet sein, der auf Schienen 35 verfahrbar ist, um mit einem Lafettenpaar mehrere Waggons be- und entladen zu können. Andererseits können die Lafetten auch als solche auf einer Ladestraße eingesetzt werden. Die Zahl der Lafetten entspricht dann vorzugsweise dem Zweifachen der zu bedienenden Waggons, um ein Be- und Entladen eines ganzen Güterzugs in wenigen Minuten zu ermöglichen. Aufs Ganze gesehen ist der Aufwand jedoch bei stationären Lafetten größer als bei mitgeführten Lafetten. Die Verwendung stationärer Lafetten besitzt allerdings den Vorteil, daß sich die Ladekapazität der dann lafettenfreien Waggons erhöht.

Insgesamt bietet das erfindungsgemäße Umschlagsystem gegenüber herkömmlichen Systemen eine Reihe von wirtschaftlich sehr bedeutenden Vorteilen. Insbesondere erfordert es keine aufwendigen Terminals, sondern im Regelfall lediglich zwei Ladestraßen ohne Verladekran oder, wenn die Lafetten von den Waggons mitgeführt werden, sonstige technische Installationen. Des weiteren ist die Verladezeit bei der Verwendung bordeigener oder einer entsprechenden Zahl stationärer Lafetten unabhängig von der Anzahl der zu verladenden Transporteinheiten; sie beträgt nur wenige Minuten. Dies erlaubt es, auf Unterwegsbahnhöfen einzelne Transporteinheiten abzuladen oder zuzuladen, ohne daß hierfür ein längerer Halt oder ein besonderes Zugfahrzeug erforderlich wäre.

Wegen der kurzen Verladezeit ist es bei der Verwendung bordeigener Verlademittel grundsätzlich auch möglich, das erfindungsgemäße Umschlagsystem in einen Personenzug zu integrieren.

Von besonderem Vorteil ist die Verwendung von Sattelanhängern, die praktisch als "Palette" fungieren, wenn sie mit Containern oder Wechselbehältern beladen sind.

## Patentansprüche

1. Umschlagsystem für den kombinierten Straßen- und Schienenverkehr aus
- Tiefbettwaggons mit einem Rahmen (1) und
- einer Radtasche (9),
- quer zur Waggonlängsachse verfahrbaren Unterfahrlafett (11) und
- Transporteinheit (7).

2. Umschlagsystem nach Anspruch 1, **dadurch gekennzeichnet, daß** der Rahmen (1) beiderseits der Radtasche (9) vorne und hinten mit jeweils einer Lafettenstandfläche (10) versehen ist.

3. Umschlagsystem nach Anspruch 1 oder 2, **dadurch gekennzeichnet, daß** die Lafettenstandfläche (10) in Höhe der Verladerampe (27,28) angeordnet ist.

4. Umschlagsystem nach einem der Ansprüche 1 bis 3, **dadurch gekennzeichnet, daß** die Radtasche zwischen den Längsträgern des Rahmens (1) angeordnet ist.

5. Umschlagsystem nach einem der Ansprüche 1 bis 4, **dadurch gekennzeichnet, daß** die Lafetten aus einem Raupenfahrwerk (11) bestehen.

6. Umschlagsystem nach einem der Ansprüche 1 bis 5, **dadurch gekennzeichnet, daß** die Lafette (11) mit einem Hubbalken (14) versehen ist.

7. Umschlagsystem nach einem der Ansprüche 1 bis 6, **dadurch gekennzeichnet, daß** der Hubbalken (14) mit einem konischen Zentrierkegel (15) versehen ist.

8. Umschlagsystem nach einem der Ansprüche 1 bis 7, **dadurch gekennzeichnet, daß** der Zentrierkegel (15) in Richtung der Längsachse des Tiefbettwaggons verschiebbar gelagert ist.

9. Umschlagsystem nach Anspruch 7 oder 8, **dadurch gekennzeichnet, daß** sich im Rahmen der Transporteinheit (7) eine Zentrieröffnung (12) befindet.

10. Umschlagsystem nach Anspruch 9, **dadurch gekennzeichnet, daß** die Zentrieröffnung (12) konisch ausgebildet ist.

11. Umschlagsystem nach einem der Ansprüche 1 bis 10, **gekennzeichnet durch** zwei in einem Abstand geringer als die Länge eines Sattelanhängers voneinander angeordnete Lafetten (11).

12. Umschlagsystem nach einem der Ansprüche 1 bis 11, **dadurch gekennzeichnet, daß** der Rahmen (1) im Bereich mindestens einer Kröpfung (2) mit einer Tragplatte (4) versehen ist.

13. Umschlagsystem nach Anspruch 12, **dadurch gekennzeichnet, daß** die Tragplatte (4) mit einer Zapfenaufnahme (5) versehen ist.

14. Umschlagsystem nach einem der Ansprüche 1 bis 13, **gekennzeichnet durch** eine Verriegelung für die Lafetten (11) am Rahmen (1) des Tiefbettwaggons.

15. Umschlagsystem nach einem der Ansprüche 1 bis 14, **gekennzeichnet durch** einen Sattelanhänger (7) mit einer Halterung für die Achsen (23) und einen verschwenkbaren Unterfahrschutz (26).

16. Umschlagsystem nach Anspruch 15, **dadurch gekennzeichnet, daß** die Halterung aus einer vertikalen Zahnstange (16), einem Doppelritzel (18) und einer horizontalen Schubstange (20) besteht.

17. Umschlagsystem nach Anspruch 16, **dadurch gekennzeichnet, daß** die Schubstange (20) einerseits über einen Lenker (24) mit einer Kurbel (25) des Unterfahrschutzes (26) und andererseits über einen rollengeführten Seilzug (21,22) oder ein horizontal verfahrbares Hakengestänge mit den Anhängerachsen (23) verbunden ist.

18. Umschlagsystem nach einem der Ansprüche 1 bis 17, **dadurch gekennzeichnet, daß** die Lafetten (11) von den Waggons (1,2) mitgeführt werden.

19. Umschlagsystem nach einem der Ansprüche 1 bis 17, **dadurch gekennzeichnet, daß** die Lafetten (11) stationär angeordnet sind.

20. Umschlagsystem nach Anspruch 19, **dadurch gekennzeichnet, daß** die Lafetten (11) auf Schienen (35) verfahrbar sind.

## Claims

1. Transit system for combined road and rail transport consisting of
- low loader wagons with a frame (1) and
- a wheel footprint (9),
- transfer carriage travelling at right angles to longitudinal axis of wagon (11) and
- transport unit (7)

2. Transit system according to claim 1 **characterised in that** the frame (1) on either side of the wheel footprint (9) at the front and at the back is provided with a transfer carriage station (10).

3. Transit system according to claim 1 or 2 **characterised in that** the transfer carriage station (10) is located at the level of the loading platform (27, 28).

4. Transit system according to one of claims 1 to 3 **characterised in that** the wheel footprint is located between the longitudinal runners of the frame (1).

5. Transit system according to claims 1 to 4 **characterised in that** the transfer carriage consists of a crawler truck (11).

6. Transit system according to one of claims 1 to 5 **characterised in that** the transfer carriage (11) is provided with a lifting beam (14).

7. Transit system according to one of claims 1 to 6 **characterised in that** the lifting beam (14) is provided with a centring cone (15).

8. Transit system according to one of claims 1 to 7 **characterised in that** the centring cone (15) is seated such that it can be moved along the longitudinal axis of the low loader wagon.

9. Transit system according to claims 7 or 8 **characterised in that** the frame of the transport unit (7) is provided with a centring opening (12).

10. Transit system according to claim 9 **characterised in that** the centring opening (12) is conically shaped.

11. Transit system according to claims 1 to 10 **characterised by** two transfer carriages (11) placed at a distance less than that of the length of a semi-trailer.

12. Transit system according to claims 1 to 11 **characterised in that** the frame (1) is provided with a bearing plate (4) in the region of at least one frame offset (2).

13. Transit system according to claim 12 **characterised in that** the bearing plate (4) is provided with a pin retainer (5).

14. Transit system according to one of claims 1 to 13 **characterised by** a locking system for the transfer carriages (11) at the frame (1) of the low loader.

15. Transit system according to one of claims 1 to 14 **characterised by** a semi-trailer (7) with a holding device for the axles (23) and a hinged crash barrier (26).

16. Transit system according to claim 15 **characterised in that** the holding device consists of a vertical rack (16), a twin pinion (18) and a horizontal pushbar (20).

17. Transit system according to claim 16 **characterised in that** the pushbar (20) is connected via an arm (24) to a crank (25) of the crash barrier (26) and via a sheathed cable (21,22) or a horizontally travelling hook linkage to the trailer axles (23).

18. Transit system according to one of claims 1 to 17 **characterised in that** the transfer carriages (11) are carried with the wagons (1,2).

19. Transit system according to one of claims 1 to 17 **characterised in that** the transfer carriages (11) are arranged in a stationary manner.

20. Transit system according to claim 19 **characterised in that** the transfer carriages (11) travel on rails (35).

## Revendications

1. Système de transbordement pour la circulation combinée routière et ferroviaire, comprenant
- des wagons à plate-forme surbaissée comportant un châssis (1) et
- un logement (9) de roues,
- des bâtis (11) à mobilité sous-jacente transversalement par rapport à l'axe longitudinal des wagons, et
- une unité de transport (7).

2. Système de transbordement selon la revendication 1, **caractérisé par le fait que** le châssis (1) est muni d'une surface respective (10) d'appui d'un bâti, à l'avant et à l'arrière, de part et d'autre du logement (9) de roues.

3. Système de transbordement selon la revendication 1 ou 2, **caractérisé par le fait que** la surface (10) d'appui d'un bâti est disposée à la hauteur de la rampe de chargement (27, 28).

4. Système de transbordement selon l'une des revendications 1 à 3, **caractérisé par le fait que** le logement de roues est interposé entre les supports longitudinaux du châssis (1).

5. Système de transbordement selon l'une des revendications 1 à 4, **caractérisé par le fait que** les bâtis consistent en un train de roulement chenillé (11).

6. Système de transbordement selon l'une des revendications 1 à 5, **caractérisé par le fait que** le bâti (11) est muni d'une traverse relevable (14).

7. Système de transbordement selon l'une des revendications 1 à 6, **caractérisé par le fait que** la traverse relevable (14) est pourvue d'un cône de centrage (15).

8. Système de transbordement selon l'une des revendications 1 à 7, **caractérisé par le fait que** le cône de centrage (15) est monté à coulissement dans la direction de l'axe longitudinal du wagon à plate-forme surbaissée.

9. Système de transbordement selon la revendication 7 ou 8, **caractérisé par le fait qu'**une ouverture de centrage (12) se trouve dans le cadre de l'unité de transport (7).

10. Système de transbordement selon la revendication 9, **caractérisé par le fait que** l'ouverture de centrage (12) est de réalisation conique.

11. Système de transbordement selon l'une des revendications 1 à 10, **caractérisé par** deux bâtis (11) mutuellement espacés d'une distance moindre que la longueur d'une semi-remorque.

12. Système de transbordement selon l'une des revendications 1 à 11, **caractérisé par le fait que** le châssis (1) est doté d'une plaque de support (4) dans la région d'au moins une zone coudée (2).

13. Système de transbordement selon la revendication 12, **caractérisé par le fait que** la plaque de support (4) est munie d'un logement (5) affecté à un tenon.

14. Système de transbordement selon l'une des revendications 1 à 13, **caractérisé par** un verrouillage des bâtis (11) sur le châssis (1) du wagon à plate-forme surbaissée.

15. Système de transbordement selon l'une des revendications 1 à 14, **caractérisé par** une semi-remorque (7) équipée d'un ensemble de retenue pour les essieux (23) et pour une protection pivotante (26) de bas de caisse.

16. Système de transbordement selon la revendication 15, **caractérisé par le fait que** l'ensemble de retenue est composé d'une crémaillère verticale (16), d'un pignon double (18) et d'une tige horizontale de poussée (20).

17. Système de transbordement selon la revendication 16, **caractérisé par le fait que** la tige de poussée (20) est reliée d'une part, par l'intermédiaire d'une biellette (24), à une manivelle (25) de la protection (26) de bas de caisse et, d'autre part, aux essieux (23) de la remorque par l'intermédiaire d'un câble de traction (21, 22) à guidage par rouleaux, ou d'une tringlerie d'accrochage mobile horizontalement.

18. Système de transbordement selon l'une des revendications 1 à 17, **caractérisé par le fait que** les bâtis (11) sont entraînés par les wagons (1, 2).

19. Système de transbordement selon l'une des revendications 1 à 17, **caractérisé par le fait que** les bâtis (11) occupent une position stationnaire.

20. Système de transbordement selon la revendication 19, **caractérisé par le fait que** les bâtis (11) sont mobiles sur des rails (35).
